# EUROPÄISCHE PATENTSCHRIFT

(11) **EP 3 338 522 B1**
(45) Veröffentlichungstag und Bekanntmachung des Hinweises auf die Patenterteilung: **01.07.2020**
(21) Anmeldenummer: 17207469.2
(22) Anmeldetag: 14.12.2017
(51) Int. Cl.: A01B 63/10

(54) **VORRICHTUNG UND VERFAHREN ZUR REGELUNG DES BETRIEBS EINES HYDRAULISCH BETÄTIGBAREN ANBAUGERÄTS AN EINEM FAHRZEUG**
DEVICE AND METHOD FOR CONTROLLING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN OUTIL PORTÉ HYDRAULIQUE D'UN VÉHICULE

(30) Priorität: 21.12.2016 DE 102016225773
(43) Veröffentlichungstag der Anmeldung: 27.06.2018
(73) Patentinhaber: Robert Bosch GmbH, 70442 Stuttgart (DE)
(72) Erfinder: Kuemmel, Bernhard, 89233 Neu-Ulm (DE)

(56) Entgegenhaltungen:
- EP-A1- 3 289 847
- DE-A1- 4 328 143
- DE-A1-102014 206 234
- JP-A- H10 276 509

## Beschreibung

Die vorliegende Erfindung betrifft eine Vorrichtung für ein Fahrzeug, insbesondere einen Traktor, mit einer hydraulischen Betätigungseinheit zur Regelung des Betriebs eines Anbaugeräts an dem Fahrzeug, sowie ein hierfür geeignetes Betriebsverfahren.

Insbesondere findet die Erfindung Anwendung bei einem Traktor, einem landwirtschaftlichen Ackerschlepper, einer mobilen Arbeitsmaschine zur Feldbearbeitung, einem Kommunalfahrzeug mit Winterdienstgerät oder dergleichen. Ackerschlepper bzw. Traktoren werden als universell einsetzbare Arbeitsmaschinen vorrangig in der Landwirtschaft zur Bearbeitung von Böden eingesetzt. Insbesondere findet die Erfindung Anwendung bei Fahrzeugen mit einem Anbaugerät zum Auswerfen von Stückgut und/oder einer Flüssigkeit.

Das Düngen des Bodes als eine der häufigen Anwendungen stellt hierbei hohe Anforderungen an die Gleichmäßigkeit des ausgestreuten Düngers. Fehlerhaftes Streuen bei der Düngerausbringung führt zu Ertragseinbußen, die erhebliche Ausmaße annehmen können, je größer die Ungenauigkeit ist. Die Ursachen für Streufehler, die sogenannte "technische Streifenkrankheit", sind in der Regel auf eine falsche Maschineneinstellung zurückzuführen. Wenn ein Streufehler sichtbar wird, dann hat dieser bereits eine Größenordnung, die zu Ertragseinbußen führt. Außerdem stört, dass eine exakte Querverteilung und Wurfweite beim Ausbringen von Mineraldünger zur Einhaltung von gesetzlichen Umweltschutzvorgaben erschwert ist (kein Düngereintrag auf Nichtzielflächen und Oberflächengewässer). Bei bekannten Düngerstreuern ändern sich mit der Höhe der Beladung des Streubehälters der Neigungswinkel und der Abstand der Streuscheiben zum Grund (Ursache: Einfederung, Bodendruck, Reifenverformung) und somit auch die Einstellparameter für Querverteilung und Arbeitsbreite. Die Beladung reduziert sich mit dem Arbeitsfortschritt permanent. In der Praxis sind bei einer Ausgangshöhe von 70 bis 90 cm beladungsabhängige Höhenänderungen von 10 bis 15 cm möglich. Dies führt zu deutlichen Abweichungen bei der Ausbringungsgenauigkeit. Die Düngerverteilung muss aus diesem Grund sorgfältig geschehen, damit der durch die geplante Düngermenge erreichbare Ertrag auch erzielt wird. Um dies zu ermöglichen, können die Einstellungen der Maschine geändert werden. Die Änderung der Maschineneinstellung während der Düngerausbringung ist jedoch zeit- und arbeitsaufwendig. Es erfolgt hierbei eine unerwünschte Arbeitsunterbrechung. Nachteilig ist insbesondere, dass die jeweils neue Maschineneinstellung bis zur nächsten Maschineneinstellung beibehalten wird, wodurch erneut Streufehler verursacht werden.

Die DE 10 2014 206 234 A1 beschreibt ein Fahrzeug, zum Beispiel Traktor, mit Bodenbearbeitungsgerät und Antriebsschlupfregelung. Um eine Anpassung der Arbeitstiefe des in den Boden eingreifenden Bodenbearbeitungsgeräts, zum Beispiel eines Pflugs oder Grubbers, an einen welligen Erdboden durchzuführen, sind die Höhe und die Neigung des Bodenbearbeitungsgeräts bezüglich des Erdbodens verstellbar.

Als Anordnung zur Beeinflussung der Lage eines landwirtschaftlichen Anbaugeräts, zum Beispiel Dünger, Streuer oder Pflug, an einem Traktor ist in der EP 3 289 847 A1 eine Steuereinheit vorgeschlagen worden, die den Sollwert der Abstandsgröße - die einen räumlichen Abstand zwischen dem Anbaugerät gegenüber der Erdoberfläche repräsentiert - aus einer entlang einer zu befahrenden Erdoberflächenkontur einzuhaltenden Arbeitshöhe und/oder Neigung des Anbaugeräts ableitet.

Im Zusammenhang mit der Regelung des Antriebs einer landwirtschaftlichen Arbeitsmaschine ist es aus der JP H 10276509 A bekannt, die Arbeitstiefe der in den Boden eingreifenden und Düngemittel in dem Boden eintragenden Arbeitsmaschine sowie den relativen Winkel der Arbeitsmaschine gegenüber einem Traktor jeweils an einen vorgegebenen Wert anzupassen.

Die DE 43 28 143 A bezieht sich auf ein Verfahren für eine Einrichtung zur Gewichtsbestimmung von an einen Schlepper angehängten Lasten.

Mit Blick auf die geschilderten Nachteile sind die verfügbaren Systeme nicht ausreichend verlässlich und/oder zu ungenau. Insoweit besteht insbesondere bei der Vergleichmäßigung der Düngerverteilung Bedarf an Verbesserungen.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld oder auf einer Straße geeignete Art die Gleichmäßigkeit der Ausbringung eines Streugutes, beispielsweise Dünger, verbessert werden.

Diese Aufgaben werden gelöst mit einer Vorrichtung und einem Verfahren gemäß den unabhängigen Patentansprüchen. Weitere Ausgestaltungen der Erfindung sind in den abhängigen Patentansprüchen angegeben. Es ist darauf hinzuweisen, dass die Beschreibung, insbesondere im Zusammenhang mit den Figuren, weitere Einzelheiten und Weiterbildungen der Erfindung anführen.

Hierzu trägt eine Vorrichtung für ein Fahrzeug mit einer hydraulischen Betätigungseinheit zur Regelung des Betriebs eines Anbaugeräts an dem Fahrzeug bei, umfassend zumindest eine Lageerfassungseinheit mit mindestens zwei in Fahrtrichtung des Fahrzeugs hintereinander positionierten und hin zum Boden gerichteten Entfernungsbestimmungssensoren und einer Auswerteeinheit mit einem der hydraulischen Betätigungseinheit zugeordneten Steuergerät, wobei die hydraulische Betätigungseinheit ein Hubwerk und einen Oberlenkerzylinder für das Anbaugerät umfasst, die von der Auswerteeinheit aktivierbar sind.

Dabei handelt es sich bei dem Fahrzeug insbesondere um einen Traktor bzw. einen sogenannten Ackerschlepper. Als Anbaugerät wird insbesondere ein Düngerstreuer angesehen. Weiterhin kann es sich bei dem Fahrzeug um ein Nutzfahrzeug handeln, dass beispielsweise Steine, Salz und/oder anderes kleinteiliges Stückgut auf einer Fahrbahn verteilen soll. Es kann sich bei dem Fahrzeug zudem um ein Nutzfahrzeug mit einem als Sprühvorrichtung ausgebildeten Anbaugerät handeln, wobei eine Flüssigkeit über den Boden/Grund verteilt wird. Bevorzugt ist das Anbaugerät mit einem Speicherbzw. Behälter für ein Betriebsmittel/Füllgut (Streugut, Flüssigkeit, etc.) ausgeführt. Das Anbaugerät kann an dem Fahrzeug (frei) hängend befestigt sein. Das Anbaugerät kann an dem Fahrzeug hängend befestigt sein, wobei das Anbaugerät über eine Radachse Bodenkontakt hat.

Zur Bestimmung der Höhenabstände und des Neigungswinkels des Fahrzeugs gegenüber dem Boden ist eine Lageerfassungseinheit mit zumindest einem ersten Entfernungsbestimmungssensor und einem zweiten Entfernungsbestimmungssensor vorgesehen. Beide Entfernungsbestimmungssensoren können jeweils einen Sender und einem Empfänger aufweisen und auf Anfrage der Auswerteeinheit z. B. Lichtwellen oder Schallwellen hin zum Boden abgeben und die vom Boden reflektierten Schallwellen empfangen. Ein Entfernungsbestimmungssensor kann die Entfernung mit akustischen oder optischen Wellen ermitteln und insbesondere nach Art eines Ultraschallsensors oder eines Lasersensors (Lasertriangulator oder Laserinterferometer) ausgeführt sein.

Die Auswerteeinheit kann mit den beiden Entfernungsbestimmungssensoren elektrisch und datenleitend verbunden und eingerichtet sein, deren Betrieb zu regeln und deren Messsignale zu verarbeiten. Insbesondere ist die Auswerteeinheit eingerichtet, aus Messsignalen der Entfernungsbestimmungssensoren jeweils die Höhenabstände und den Neigungswinkel gegenüber dem Boden zu ermitteln. Die in der Auswerteeinheit bestimmten Entfernungsmessgrößen können mit vorgegebenen Parametern des Steuergeräts abgeglichen und/oder beeinflusst werden, wobei dann auch ein Regelungssignal an das Hydraulikbetriebssystem übermittelt und damit der Betrieb der hydraulischen Betätigungseinheit des Anbaugeräts beeinflusst werden kann.

Bevorzugt ist, dass die Entfernungsbestimmungssensoren mit einem Versatz in Fahrrichtung von mindestens 1 Meter angeordnet sind. Der Höhenabstand ist bevorzugt relativ zum Fahrzeug fest fixiert. Der Höhenabstand der jeweiligen Entfernungsbestimmungssensoren und der Versatz der Messsignale können zur Ermittlung der tatsächlichen Höhenabstände der Entfernungsbestimmungssensoren über Grund und des Neigungswinkels des Fahrzeuges herangezogen werden, so dass dieses Problem konstruktiv auf besonders einfache Weise gelöst wurde.

Der (in Fahrtrichtung gesehen) erste Entfernungsbestimmungssensor kann mittig im vorderen Bereich des Fahrzeugs, beispielsweise benachbart, direkt vor der Vorderachse angeordnet sein. Der (in Fahrtrichtung gesehen) zweite Entfernungsbestimmungssensor kann im hinteren Bereich des Fahrzeugs, beispielsweise mittig zwischen Hinterrädern angeordnet sein. Die Anbringung an einem Vorderrad ist insbesondere dann zu vermeiden, wenn bei dem Fahrzeug die Vorderachse mittig pendelnd und gefedert aufgehängt ist. Der dort ermittelte Messwert würde nicht der Relativbewegung des vorderen Chasisbereichs zum Boden entsprechen. Eine Anbringung in unmittelbarer Reifennähe würde zudem noch eine hohe Verschmutzungs- und Beschädigungsgefahr nach sich ziehen. Grundsätzlich führt eine Anbringung der Sensoren in der Fahrzeugmitte (bezogen auf die Längsachse) auch zu einer Verringerung von Messfehlern durch Unterschiede im Bodenabstand von linker und rechter Fahrspur des Fahrzeugs.

Die Entfernungsbestimmungssensoren sind bevorzugt (im Wesentlichen) senkrecht auf den Boden ausgerichtet. Die Anbringung der Entfernungsbestimmungssensoren zwischen den Vorder- und Hinterrädern des Fahrzeugs bzw. Traktors bietet einen geschützten Raum und kann (z. B. auch bei einem weiten Radstand) zweckdienlich sein. Durch einen zusätzlichen mechanischen Schutz gegen Verschmutzung der Entfernungsbestimmungssensoren wird die Messgenauigkeit weiter verbessert.

Die hydraulische Betätigungseinheit umfasst bevorzugt ein Hubwerk und einen Oberlenkerzylinder für das Anbaugerät, die beide von der Auswerteeinheit aktivierbar sind. Hierfür sind insbesondere elektrische und/oder datenleitende Verbindungen vorgesehen. Insbesondere sind die Auswerteeinheit und das Hubwerk und der Oberlenkerzylinder so eingerichtet, dass die Auswerteeinheit mindestens eine Zustandsgröße einstellen oder/oder auf ein Stellorgan des Hubwerks sowie des Oberlenkerzylinders zugreifen kann. Hubwerk und Oberlenkerzylinder können dem Fahrzeug und/oder dem Anbaugerät zugeordnet sein. Sind Hubwerk und Oberlenkerzylinder dem Anbaugerät zugeordnet, so hat das Anbaugerät insbesondere ein (eigenes) Fahrwerk, einen Speicher und eine Auswurfeinheit, wobei Hubwerk und Oberlenkerzylinder die Höhenlage und/oder die Neigung von Fahrwerk und Auswurfeinheit zueinander verstellen können.

Die in der Auswerteeinheit bestimmte Lage des Fahrzeugs kann mit vorgegebenen (z. B. gespeicherten und/oder von dem Bediener des Fahrzeugs eingestellten) Parametern abgeglichen oder beeinflusst werden, wobei ein Regelungssignal an das Steuergerät übermittelt und derart der Betrieb der hydraulischen Betätigungseinheit des Anbaugeräts beeinflusst werden kann. Die Auswerteeinheit kann ein separates (elektronisches) Aggregat sein. Es ist möglich, dass die Auswerteeinheit Teil des Steuergeräts zur Ansteuerung der hydraulischen Betätigungseinheit selbst ist. Die (mindestens eine) datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Mit der hier vorgestellten Vorrichtung werden durch kontinuierliche direkte Abstandsmessung mittels Entfernungsbestimmungssensoren (Distanzsensoren), z. B. an bzw. nahe der Vorderachsaufhängung und an bzw. nahe der Hinterachse eines Fahrzeugs, insbesondere beladungsabhängige Veränderungen der Fahrzeuglage zum Grund erfasst. Ebenso ist eine indirekte Abstandsmessung, z. B. über Zustandsgrößen einer Federung oder Radaufhängung möglich.

Anbaugeräte, am Heckhubwerk des Traktors angebaut, die eine exakte Positionierung über dem Grund für die Einhaltung des Arbeitsergebnisses erfordern, können somit auf vorteilhafte Weise permanent auf den sich stetig veränderten Beladungszustand (bedingt durch das Ausbringen des mitgeführten Betriebsmittels, z. B. Dünger, Wasser etc.) angepasst werden. Die Messsignale der Sensoren können bevorzugt durch eine elektrohydraulische Hubwerksregelung (EHR) bzw. ein EHR-Steuergerät erfasst werden. Als Aktuatoren dienen das Heckhubwerk sowie ein üblicherweise an einer Traktorventilscheibe angebauter hydraulischer Oberlenker. Mittels des Hubwerks kann die Höhenlage des Anbaugeräts über Grund variiert werden. Mittels des Oberlenkerzylinders kann die Neigung des Anbaugeräts hin zum Grund variiert werden.

Die besonderen Vorteile dieser Maßnahmen bestehen insbesondere in der Einsparung von Betriebsmitteln durch permanentes Einhalten der Betriebsparameter des Anbaugeräts, in der Ertragsverbesserungen und/oder in der Erfüllung von Umweltstandards durch Einhalten der Arbeitsbreiten (kein unnötiger Nitrateintrag, Gewässerschutz; kein Dünger/Pflanzenschutzmittel/Streusalz etc. auf Nichtzielflächen). Außerdem gelingt auf einfache Weise die Einhaltung der Arbeitsparameter von am Traktorhubwerk angebauten Arbeitsgeräten, die über Grund geführt werden müssen, unter anderem exakte Querverteilung und Wurfweite beim Ausbringen von Mineraldünger sowie Einhaltung von gesetzlichen Umweltschutzvorgaben (kein Düngereintrag auf Nichtzielflächen und Oberflächengewässer).

Die hier am Beispiel eines am Traktorhubwerk angebauten Schleuderdüngerstreuers dargestellte automatisierte und durch Regelung ständig aktualisierte Niveaueinstellung ermöglicht weiterhin alle anderen Anwendungen, die exakte Höhenführung über Grund erfordern (z. B. Höhenführung einer Anbaufeldspritze; Winterdienststeuer).

Bevorzugt sind die Entfernungsbestimmungssensoren (nur) an dem Fahrzeug (selbst) positioniert. Hierbei kann es sich um eine Anordnung handeln, die permanent an dem Fahrzeug montierbar ist. Eine derartige Anordnung ist unabhängig von der Art des Anbaugeräts.

Es ist möglich, die Entfernungsbestimmungssensoren (nur) am Anbaugerät (selbst) zu positionieren. Es ist möglich, dass ein Adapter vorgesehen ist, mittels derer die Entfernungsbestimmungssensoren zueinander ausgerichtet an verschiedenen Anbaugerät montierbar sind. Die ermittelten Sensordaten können per ISO-Bus-Schnittstelle an das Fahrzeug und somit an das EHR-Steuergerät übermittelt werden. Die Funktionalität wäre identisch umsetzbar.

Die Entfernungsbestimmungssensoren können eingerichtet sein, zumindest einen Höhenabstand oder einen Neigungswinkel des Fahrzeugs oder des Anbaugeräts gegenüber dem Boden zu ermitteln. Ein Vorteil besteht darin, dass mittels der beiden Entfernungsbestimmungssensoren sowohl direkt die Höhenabstände als auch durch trigonometrische Berechnung der Neigungswinkel ermittelt werden kann. Das gilt sowohl für den Fall der Anordnung der Entfernungsbestimmungssensoren am Fahrzeug ebenso wie auch für den Fall der Anordnung an dem Anbaugerät.

Ganz besonders bevorzugt ist zur Niveauregelung vorgesehen, dass das gesamte Anbaugerät und/oder ein Teil davon hinsichtlich eines Höhenabstands über Grund/Boden durch das Hubwerk und eine Neigung zum Grund/Boden durch den Oberlenkerzylinder einstellbar sind. Der Höhenabstand und der Neigungswinkel gegenüber dem Boden kann sich beispielsweise bei Entladung bzw. Gewichtsreduktion des Anbaugerätes bzw. dessen Behälters vergrößern, was durch eine automatische Niveaueinstellung über Grund permanent angepasst werden kann.

Durch die Anbringung eines zusätzlichen Neigungssensors am Anbaugerät kann eine vollautomatisierte Grundeinstellung des Maschinenniveaus bei Arbeitsbeginn verwirklicht werden. Ohne diesen Sensor muss die Maschine vor Arbeitsbeginn in der Neigung manuell positioniert werden. Die Hubwerkshöhe kann für diese Funktion durch den bereits am Traktor vorhandenen EHR-Winkelsensor erkannt werden.

Weitere Details der Vorrichtung ergeben sich auch aus der nachfolgenden Erläuterung zum Betriebsverfahren. Insofern können die Erläuterungen zum Verfahren hier ergänzend herangezogen werden. Ebenso gilt, dass die vorstehenden Erläuterungen zur Vorrichtung die Beschreibung des Verfahrens ergänzen können.

Es wird ein Verfahren zum Betrieb eines Fahrzeugs, insbesondere eines Traktors, mit einer hydraulischen Betätigungseinheit zur Regelung des Betriebs eines Anbaugeräts an dem Fahrzeug vorgeschlagen. Das Verfahren kann insbesondere mit der hier ebenfalls vorgeschlagenen Vorrichtung durchgeführt werden, wobei die Auswerteeinheit dazu eingerichtet ist, das Verfahren durchzuführen. Das Verfahren umfasst zumindest die folgenden Schritte:
a) Austragen eines Füllgutes aus einem Behälter des Anbaugeräts während der Fahrt des Fahrzeugs;
b) Bestimmen eines Höhenabstands und einer Neigung des Fahrzeugs oder Anbaugerätes gegenüber dem Boden während der Fahrt des Fahrzeugs;
c) Vergleichen des ermittelten Höhenabstands und der ermittelten Neigung mit mindestens einem Sollwert;
d) Aktivieren zumindest eines Hubwerks oder eines Oberlenkerzylinders, wenn zumindest der Höhenabstand oder der Neigungswinkel von dem Sollwert abweicht.

Die Verfahrensschritte können in der hier angegebenen Reihenfolge durchgeführt werden. Es ist möglich, dass einzelne Schritte gleichzeitig und/oder zueinander überlagernd durchgeführt werden.

In Abhängigkeit des Füllzustandes (eines Behälters) des Anbaugeräts mit Füllgut erfolgt eine sich verändernde Belastung des Anbaugeräts während des Betriebes, die eine Veränderung des Höhenabstandes und des Neigungswinkels des Anbaugeräts gegenüber dem Boden zur Folge hat und die zugleich zu einer Neigung des Fahrzeugs gegenüber dem Boden führt. Mit andauerndem Austragen bzw. zunehmender Entleerung des Füllgutes aus dem Behälter des Anbaugeräts während der Fahrt gemäß Schritt a) nimmt die Beladung und damit die Belastung ab, die einerseits eine Zunahme des Höhenabstands und des Neigungswinkels (Abwurfwinkel) des Anbaugerätes gegenüber dem Boden und ggf. zugleich eine Abnahme der Neigung des Fahrzeugs gegenüber dem Boden nach sich zieht.

Die entsprechend Schritt b) ermittelte Höhenlage und Neigung des Fahrzeugs bzw. Anbaugerätes während der Fahrt wird gemäß Schritt c) mit mindestens einem Sollwert verglichen, der insbesondere repräsentativ für einen Abwurfwinkel des Füllgutes zum Boden (z. B. Höhenabstand und Neigung einer Sprühvorrichtung oder Auswurfvorrichtung) repräsentativ ist.

Auf Basis des Ergebnisses in Schritt c) in Verbindung mit mindestens einem (fest oder variabel) vorgebbaren (gewünschten) Sollwert für den Höhenabstand und den Neigungswinkel des Fahrzeugs/Anbaugerätes können in Schritt d) das Hubwerk und der Oberlenkerzylinder aktiviert werden. So können bspw. das Anbaugerät bei Erreichen bzw. Überschreiten des Sollwerts abgesenkt und der Abwurfwinkel verkleinert werden. Damit können sich der Höhenabstand und der Neigungswinkel des Behälters zum Boden verändern. Folglich können durch den Betrieb des Hubwerks und/oder des Oberlenkerzylinders des Anbaugeräts die Wurfweite und die Querverteilung des Füllgutes gezielt geregelt bzw. eingestellt werden.

Bevorzugt umfasst das vorgeschlagene Verfahren in Schritt b) folgende Prozesse:
b.1) Bestimmen zweier Höhenabstände mittels zwei in Fahrtrichtung des Fahrzeugs hintereinander positionierten und hin zum Boden gerichteten Entfernungsbestimmungssensoren;
b.2) Ermitteln einer Differenz zwischen den mit den Entfernungsbestimmungssensoren bestimmten Höhenabständen;
b.3) Ermitteln der Neigung aus der entfernungsmäßigen Differenz.

Prozess b.1) umfasst insbesondere zumindest einen, bevorzugt alle der folgenden Abläufe:
i) Bestimmen eines Höhenabstands an einer Stelle A mit einem ersten Entfernungsbestimmungssensor durch Emittieren von optischen oder akustischen Wellen (im Wesentlichen) senkrecht hin zum Boden und Detektieren der vom Boden reflektierten Wellen und zeitlichem Nachhalten der für den Höhenabstand (Bodenentfernung) charakteristischen Messsignale.
ii) Bestimmen eines Höhenabstands an einer Stelle B (in Fahrtrichtung mit einem vorgegebenen Abstand hinter bzw. fluchtend zu der Stelle A) mit einem zweiten Entfernungsbestimmungssensor durch Emittieren von optischen oder akustischen Wellen (im Wesentlichen) senkrecht hin zum Boden und Detektieren der vom Boden reflektierten Wellen und zeitlichem Nachhalten der für den Höhenabstand (Bodenentfernung) charakteristischen Messsignale.

Aus den in Prozess b.1) bestimmten Höhenabständen kann dann in Prozess b.2) die entfernungsmäßige Differenz bzw. Abweichung zwischen den erfassten Höhenabständen ermittelt und berechnet werden, bevorzugt in der Auswerteeinheit. Die so ermittelte Differenz wird zusammen mit der bekannten Position der Entfernungsbestimmungssensoren mit Bezug auf die Fahrtrichtung in Schritt b.3) dann zur Ermittlung der Neigung des Fahrzeugs herangezogen.

Bevorzugt ist, dass die in Prozess b.1) bestimmten Höhenabstände während der Fahrt des Fahrzeugs intermittierend bzw. kontinuierlich gemessen werden. Die Höhenabstände werden speziell mit den Entfernungsbestimmungssensoren, die bevorzugt als Ultraschallsensoren ausgeführt sind, detektiert.

Der mindestens eine Sollwert zur Vorgabe einer gewünschten Neigung und/oder eines gewünschten Höhenabstands (am Anbaugerät) wird bevorzugt seitens eines Steuergeräts bereitgestellt und/oder berechnet. Hierbei kann auf die bekannten bzw. von der Fahrzeugsteuerung einfach bereitstellbaren Daten zurückgegriffen werden. Dazu ist insbesondere die Auswerteeinheit entsprechend ausgerüstet.

Zweckmäßig werden die in Prozess b.1) bestimmten Höhenabstände permanent detektiert. Gegebenenfalls wird mit einem an dem Anbaugerät positionierten Neigungssensor eine Grundeinstellung des Maschinenniveaus vorgenommen.

Entsprechend einer weiteren Offenbarung wird die Verwendung einer Lageerfassungseinheit zur geregelten Einstellung eines vorgegebenen Höhenabstands und eines vorgegebenen Neigungswinkel eines Anbaugeräts eines Fahrzeugs gegenüber dem Boden vorgeschlagen. Die Lageerfassungseinheit ist hierfür mit zumindest zwei (in Fahrtrichtung) beabstandet zueinander positionierten und hin zum Boden gerichteten Entfernungsbestimmungssensoren ausgeführt, die eingerichtet ist, zumindest einen Höhenabstand und eine Neigung eines Fahrzeugs oder eines Anbaugerätes des Fahrzeugs zum Boden hin zu bestimmen. Besonders bevorzugt wird die Lageerfassungseinheit dazu verwendet, eine Abwurfwinkel bzw. einen Boden-Auftreffbereich für Streugut und/oder Flüssigkeit ausgehend von dem Anbaugerät gezielt einzustellen.

Die Erfindung und das technische Umfeld werden nachfolgend anhand von Figuren näher erläutert. Dabei sind regelmäßig gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: eine Seitenansicht eines Traktors mit einer hydraulischen Betätigungseinheit zur Regelung des Betriebs eines Anbaugeräts sowie mit einem Hubwerk und einem Oberlenkerzylinder;
- Fig. 2:: eine Seitenansicht eines Traktors, bei der der Traktor gegenüber dem Boden geneigt ist, am Traktor zwei Entfernungsbestimmungssensoren positioniert sind und am Anbaugerät des Traktors ein teilweise gefüllter Behälter angebracht ist;
- Fig. 3:: eine Seitenansicht eines Traktors, bei der der Behälter nahezu vollständig mit Füllgut gefüllt ist, wobei der Hubwerkszylinder ausgefahren und der Oberlenkerzylinder eingefahren ist; und
- Fig. 4:: eine Seitenansicht eines Traktors, jedoch mit nahezu entleertem Behälter, wobei der Hubwerkszylinder eingefahren und der Oberlenkerzylinder ausgefahren ist.

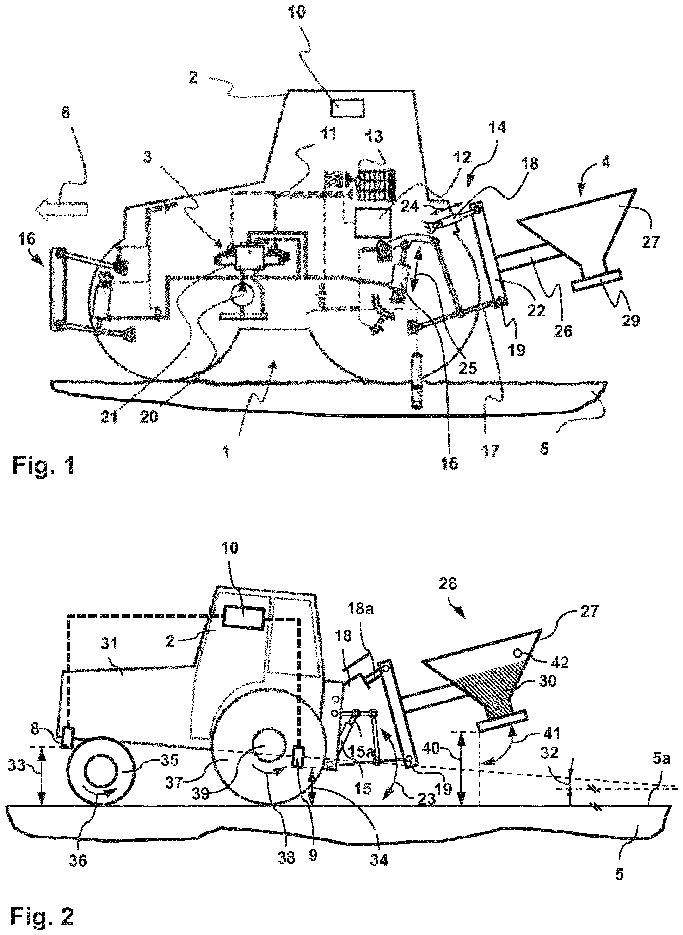

Fig. 1 zeigt die prinzipielle Darstellung der hier angegebenen Vorrichtung 1 an einem Fahrzeug 2, insbesondere nach Art eines Traktors bei der Bodenbearbeitung mit einem Anbaugerät 4. Dabei trägt das Fahrzeug 2 bei einer Fahrt in Fahrtrichtung 6 das Anbaugerät 4 hinter sich her. Optional hat das Fahrzeug 2 auch ein Fronthubwerk 16. Der allgemeine Fahrbetrieb des Fahrzeugs 2 kann über eine (ggf. separate) Fahrzeugsteuerung 12 beeinflusst werden. Die Lage bzw. Position des Anbaugeräts 4 kann mit einer hydraulischen Betätigungseinheit 3, aufweisend ein Steuergerät 13 zur Ansteuerung der hydraulischen Betätigungseinheit 3 und ein heckseitiges Hubwerk 14 mit einem Unterlenkerzylinder 15 eingestellt werden. Für die Kommunikation der Bauteile untereinander können entsprechende datenleitende Verbindungen 11 vorgesehen sein. Die hydraulische Betätigungseinheit 3 kann insbesondere wie folgt aufgebaut sein: Die Pumpe 20 fördert einen Ölstrom zum Regelventil 21, welches den Unterlenkerzylinder 15 steuert. Dieser wirkt auf die Unterlenker 17, wodurch das Anbaugerät 4 gehoben, gehalten oder abgesenkt werden kann. Mit 18 ist ein Oberlenkerzylinder bezeichnet.

Als Anbaugerät 4 ist über ein Halteelement 26 der Behälter 27 z. B. eines Schleuderdüngerstreuers 28 an einem Träger 22 befestigt. Am unteren Ende des Behälters 27 sind zwei Streuscheiben 29 vorhanden.

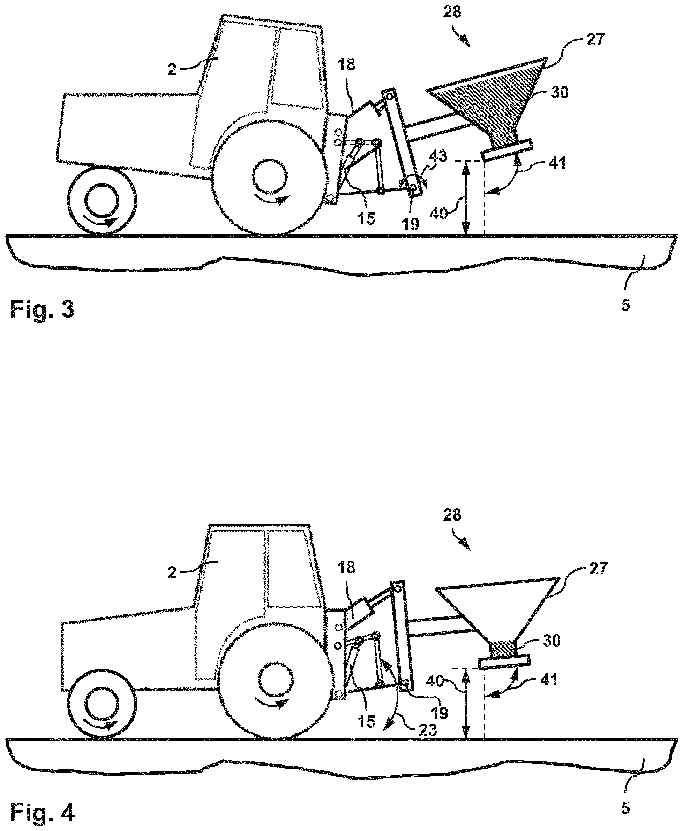

An einem Ende des Trägers 22 greift die Stange 18a des Oberlenkerzylinders 18 und an dessen anderem Ende der Unterlenkerzylinder 17 ein. Bei Bewegung der Stange 18a in Bewegungsrichtung 24 wird der Träger 22 um die Querachse 19 gedreht (vgl. Pfeil zur Drehrichtung 43 in Fig. 3). Bei Bewegung der Stange 15a des Unterlenkerzylinders 15 in Bewegungsrichtung 25 wird in Bewegungsrichtung des Hubwerks 23 (gemäß Pfeil in Fig. 2) der Unterlenker 17 in Höhenrichtung und damit das Hubwerk 14 in Höhenrichtung angehoben oder abgesenkt.

Fig. 2 zeigt eine schematische Darstellung des Fahrzeugs 2 (Ackerschlepper) mit einem EHR-System. Hierbei ist das Anbaugerät 4 über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, das Anbaugerät 4 in dieser Konstellation sowohl in seiner Höhe als auch in seiner Neigung um die Querachse 19 zu verstellen.

Bei einer Beladung des Behälters 27 mit Füllgut 30 ist das Chassis 31 des Fahrzeugs 2 in einem Neigungswinkel 32 zur Bodenoberfläche 5a des Bodens 5 geneigt. Die Neigung kann auch daraus resultieren, dass die Achse mit den Vorderrädern 35 gefedert und die Achse mit den Hinterrädern 37 (im Wesentlichen) ungefedert sind. Zur Bestimmung eines ersten Höhenabstands 33 und eines zweiten Höhenabstandes 34 des Fahrzeugs 2 gegenüber dem Boden 5 sind (etwa) mittig auf der Fahrzeuglängsachse vor den Vorderrädern 35 der Vorderachse am Fahrzeug 2 ein erster Entfernungsbestimmungssensor 8 und (etwa) mittig auf der Fahrzeuglängsachse hinter den Hinterrädern 37 der Hinterachse am Fahrzeug 2 ein zweiter Entfernungsbestimmungssensor 9 angeordnet, die mit der Auswerteeinheit 10 elektrisch verbunden sind. Der erste Höhenabstand 33 ist größer als der zweite Höhenabstand 34, wodurch das Fahrzeug 2 gegenüber dem Boden 5 entsprechend dem Neigungswinkel 32 geneigt ist. Das starr mit dem Fahrzeug 2 verbundene Anbaugerät 4 ist dadurch ebenfalls gegenüber dem Boden 5 geneigt.

Bei einer großen Beladung verringert sich der Höhenabstand 40 des Anbaugeräts 4 bzw. des Behälters 27 bzw. der Streuscheiben 29 zum Boden 5 und ebenso kann sich der Neigungswinkel 41 des Anbaugeräts 4 gegenüber dem Boden 5 verkleinern. Der Drehpunkt des derart gebildeten zweiarmigen Hebels befindet sich im Wesentlichen in der Hinterachse 39 des Hinterrads 37. Wird während der Fahrt des Fahrzeugs 2 das Füllgut 30 ausgetragen (hier auch angedeutet durch die Drehrichtung des Vorderrades 36 und die Drehrichtung des Hinterrades 38) reduziert sich das Gewicht im hinteren Bereich des Fahrzeugs, so dass sich der Höhenabstand 40 des Anbaugeräts 4 bzw. des Behälters 27 bzw. der Streuscheiben 29 zum Boden 5 wieder vergrößert der Neigungswinkel 41 des Anbaugeräts 4 gegenüber dem Boden 5 vergrößert.

Die Fig. 3 und 4 veranschaulichen die Wirkungsweise der automatischen Niveaueinstellung des Anbaugeräts 4 im Wesentlichen mit der Lageerfassungseinheit 7, der hydraulischen Betätigungseinheit 3, der Auswerteeinheit 10, dem Steuergerät 13, dem Hubwerk 14 und dem Oberlenkerzylinder 18.

Nach Fig. 3 ist der Behälter 27 des Schleuderdüngerstreuers 28 nahezu vollständig mit Füllgut 30, z. B. Düngemittel, gefüllt. Die Stange 15a des Unterlenkerzylinders 15 ist ausgefahren und die Stange 18a des Oberlenkerzylinders 18 ist eingefahren. Zwischen der Unterseite des Behälters 27 und der Oberfläche 5a des Bodens 5 sind ein gewünschter Höhenabstand 40 und ein gewünschter Neigungswinkel 41 eingestellt.

Entsprechend Fig. 4 ist der Behälter 27 bis auf einen Restanteil an Füllgut 30 nahezu vollständig entleert. Durch die Entleerung (Entlastung) wären an sich - das heißt ohne Niveauregelung - der Abstand 40 des Behälters 27 zum Boden 5 und der Winkel 41 des Behälters 27 gegenüber dem Boden 5 vergrößert. Jedoch ist durch Aktivierung des Hubwerks 14 über die hydraulische Betätigungseinheit 3 veranlasst durch das Steuergerät 13 die Stange 15a des Unterlenkerzylinders 15 eingefahren und die Stange 18a des Oberlenkerzylinders 18 ausgefahren. Durch die Bewegung des Hubzylinders 15 wurde das Hubwerk 14 zusammen mit dem Anbaugerät 4 abgesenkt. Durch die Bewegung des Oberlenkerzylinders 18 wurde der Träger 22 um die Querachse 19 im Uhrzeigersinn (vgl. Pfeil 43 in Fig. 3) gedreht und dadurch der Neigungswinkel 41 verkleinert. Dadurch wurde der Behälter 27 auf den gewünschten Abstand 40 abgesenkt und der Neigungswinkel 41 auf den gewünschten Wert verringert.

Mit der hier vorgestellten Vorrichtung/Verfahrensweise werden der Höhenabstand 40 und der Neigungswinkel 41 des Anbaugeräts 4 auch bei fortschreitender Entleerung des Behälters 27 permanent auf den jeweils vorgegebenen Wert eingestellt, das heißt es erfolgt eine automatische Einstellung der Lage bzw. Ausrichtung des Anbaugeräts 4 über Grund.

### Bezugszeichenliste

- 1: Vorrichtung
- 2: Fahrzeug
- 3: hydraulische Betätigungseinheit
- 4: Anbaugerät
- 5: Boden
- 5a: Bodenoberfläche
- 6: Fahrtrichtung
- 7: Lageerfassungseinheit
- 8: erster Entfernungsbestimmungssensor
- 9: zweiter Entfernungsbestimmungssensor
- 10: Auswerteeinheit
- 11: datenleitende Verbindung
- 12: Fahrzeugsteuerung
- 13: Steuergerät
- 14: Hubwerk
- 15: Unterlenkerzylinder
- 15a: Stange Unterlenkerzylinder
- 16: Fronthubwerk
- 17: Unterlenker
- 18: Oberlenkerzylinder
- 18a: Stange Oberlenkerzylinder
- 19: Querachse
- 20: Pumpe
- 21: Regelventil
- 22: Träger
- 23: Bewegungsrichtung Hubwerk
- 24: Bewegungsrichtung Stange Oberlenkerzylinder
- 25: Bewegungsrichtung Stange Unterlenkerzylinder
- 26: Halteelement
- 27: Behälter
- 28: Schleuderdüngerstreuer
- 29: Streuscheiben
- 30: Füllgut
- 31: Chassis
- 32: Neigungswinkel Fahrzeug/Boden
- 33: erster Höhenabstand Fahrzeug/Boden
- 34: zweiter Höhenabstand Fahrzeug/Boden
- 35: Vorderrad
- 36: Drehrichtung Vorderrad
- 37: Hinterrad
- 38: Drehrichtung Hinterrad
- 39: Achse Hinterrad
- 40: Höhenabstand Anbaugerät/Boden
- 41: Neigungswinkel Anbaugerät/Boden
- 42: Neigungssensor
- 43: Drehrichtung

## Patentansprüche

1. Vorrichtung (1) für ein Fahrzeug (2) mit einer hydraulischen Betätigungseinheit (3) zur Regelung des Betriebs eines Anbaugeräts (4) an dem Fahrzeug (2) umfassend zumindest eine Lageerfassungseinheit (7) mit mindestens zwei in Fahrtrichtung (6) des Fahrzeugs (2) hintereinander positionierten und hin zum Boden (5) gerichteten Entfernungsbestimmungssensoren (8, 9) und einer Auswerteeinheit (10) mit einem der hydraulischen Betätigungseinheit (3) zugeordnetem Steuergerät (13), wobei die hydraulische Betätigungseinheit (3) ein Hubwerk (14) und einen Oberlenkerzylinder (18) für das Anbaugerät (4) umfasst, die von der Auswerteeinheit (10) aktivierbar sind,
wobei die Auswerteeinheit (10) eingerichtet ist die folgenden Verfahrensschritte durchzuführen:
a) Austragen eines Füllgutes (30) aus einem Behälter (27) des Anbaugeräts (4) während der Fahrt des Fahrzeugs (2);
b) Bestimmen eines Höhenabstands (40) und einer Neigung (32) des Fahrzeugs (2) oder Anbaugerätes (4) gegenüber dem Boden (5) während der Fahrt des Fahrzeugs (2);
c) Vergleichen des ermittelten Höhenabstands und der ermittelten Neigung mit mindestens einem vorgebbaren Sollwert;
d) Aktivieren zumindest eines Hubwerks (14) oder eines Oberlenkerzylinders (18), wenn zumindest der Höhenabstand (40) oder der Neigungswinkel (41) von dem Sollwert abweicht.

2. Vorrichtung (1) nach Patentanspruch 1, wobei die Entfernungsbestimmungssensoren (8, 9) an dem Fahrzeug (2) positioniert sind.

3. Vorrichtung (1) nach Patentanspruch 1, wobei die Entfernungsbestimmungssensoren (8, 9) an dem Anbaugerät (4) positioniert sind.

4. Vorrichtung (1) nach einem der vorhergehenden Patentansprüche, wobei die Entfernungsbestimmungssensoren (8, 9) eingerichtet sind, zumindest einen Höhenabstand (33, 34, 40) oder einen Neigungswinkel (32, 41) des Fahrzeugs (2) oder des Anbaugeräts (4) gegenüber dem Boden (5) zu ermitteln.

5. Vorrichtung (1) nach einem der vorhergehenden Patentansprüche, wobei zur Niveauregelung des Anbaugeräts (4) gegenüber dem Boden (5) dessen Höhenabstand (40) durch das Hubwerk (14) und dessen Neigung (41) durch den Oberlenkerzylinder (18) einstellbar sind.

6. Verfahren zum Betrieb eines Fahrzeugs (2) mit einer hydraulischen Betätigungseinheit (3) zur Regelung des Betriebs eines Anbaugeräts (4) an dem Fahrzeug (2) und mit einer Lageerfassungseinheit (7), umfassend zumindest die folgenden Schritte:
a) Austragen eines Füllgutes (30) aus einem Behälter (27) des Anbaugeräts (4) während der Fahrt des Fahrzeugs (2);
b) Bestimmen eines Höhenabstands (40) und einer Neigung (32) des Fahrzeugs (2) oder Anbaugerätes (4) gegenüber dem Boden (5) während der Fahrt des Fahrzeugs (2);
c) Vergleichen des ermittelten Höhenabstands und der ermittelten Neigung mit mindestens einem vorgebbaren Sollwert;
d) Aktivieren zumindest eines Hubwerks (14) oder eines Oberlenkerzylinders (18), wenn zumindest der Höhenabstand (40) oder der Neigungswinkel (41) von dem Sollwert abweicht.

7. Verfahren nach Patentanspruch 6, umfassend in Schritt b) folgende Prozesse:
b.1) Bestimmen zweier Höhenabstände (33, 34) mittels zwei in Fahrtrichtung (6) des Fahrzeugs (2) hintereinander positionierten und hin zum Boden (5) gerichteten Entfernungsbestimmungssensoren (8, 9);
b.2) Ermitteln einer Differenz zwischen den mit den Entfernungsbestimmungssensoren (8, 9) bestimmten Höhenabständen (33, 34);
b.3) Ermitteln der Neigung des Fahrzeugs (2) aus der entfernungsmäßigen Differenz.

8. Verfahren nach Patentanspruch 7, wobei die in Prozess b.1) bestimmten Höhenabstände (33, 34, 40) permanent detektiert werden.

## Claims

1. Apparatus (1) for a vehicle (2) with a hydraulic actuating unit (3) for the regulation of the operation of an accessory unit (4) on the vehicle (2) comprising at least one position detection unit (7) with at least two distance determination sensors (8, 9) which are positioned behind one another in the driving direction (6) of the vehicle (2) and are directed towards the ground (5), and with an evaluation unit (10) with a control unit (13) which is assigned to the hydraulic actuating unit (3), the hydraulic actuating unit (3) comprising a lifting unit (14) and a top link cylinder (18) for the accessory unit (4), which lifting unit (14) and top link cylinder (18) can be activated by the evaluation unit (10), the evaluation unit (10) being set up to carry out the following method steps:
a) discharging of a filling material (30) from a container (27) of the accessory unit (4) during driving of the vehicle (2);
b) ascertaining of a vertical height (40) and a tilt (32) of the vehicle (2) or accessory unit (4) with respect to the ground (5) during the driving of the vehicle (2);
c) comparing of the determined vertical height and the determined tilt with at least one predefinable setpoint value;
d) activating of at least one lifting unit (14) or one top link cylinder (18) if at least the vertical height (40) or the tilt angle (41) differs from the setpoint value.

2. Apparatus (1) according to Patent Claim 1, the distance determination sensors (8, 9) being positioned on the vehicle (2).

3. Apparatus (1) according to Patent Claim 1, the distance determination sensors (8, 9) being positioned on the accessory unit (4).

4. Apparatus (1) according to one of the preceding patent claims, the distance determination sensors (8, 9) being set up to determine at least one vertical height (33, 34, 40) or one tilt angle (32, 41) of the vehicle (2) or the accessory unit (4) with respect to the ground (5) .

5. Apparatus (1) according to one of the preceding patent claims, it being possible for the vertical height (40) of the accessory unit (4) to be set by way of the lifting unit (14) and for the tilt (41) of the accessory unit (4) to be set by way of the top link cylinder (18), in order to regulate the ride height of the said accessory unit (4) with respect to the ground (5).

6. Method for operating a vehicle (2) with a hydraulic actuating unit (3) for the regulation of the operation of an accessory unit (4) on the vehicle (2) and with a position detection unit (7), comprising at least the following steps:
a) discharging of a filling material (30) from a container (27) of the accessory unit (4) during driving of the vehicle (2);
b) ascertaining of a vertical height (40) and a tilt (32) of the vehicle (2) or accessory unit (4) with respect to the ground (5) during the driving of the vehicle (2);
c) comparing of the determined vertical height and the determined tilt with at least one predefinable setpoint value;
d) activating of at least one lifting unit (14) or one top link cylinder (18) if at least the vertical height (40) or the tilt angle (41) differs from the setpoint value.

7. Method according to Patent Claim 6, comprising the following processes in step b):
b.1) determining of two vertical heights (33, 34) by means of two distance determination sensors (8, 9) which are positioned behind one another in the driving direction (6) of the vehicle (2) and are directed towards the ground (5);
b.2) ascertaining of a difference between the vertical heights (33, 34) which are determined by way of the distance determination sensors (8, 9);
b.3) ascertaining of the tilt of the vehicle (2) from the difference in terms of the distance.

8. Method according to Patent Claim 7, the vertical heights (33, 34, 40) which are ascertained in process b.1) being detected permanently.

## Revendications

1. Dispositif (1) pour un véhicule (2) comprenant une unité d'actionnement hydraulique (3) destinée à réguler le fonctionnement d'un outil porté (4) sur le véhicule (2), comprenant au moins une unité de détection de position (7) pourvue d'au moins deux capteurs de détermination de distance (8, 9), positionnés l'un derrière l'autre dans le sens du déplacement (6) du véhicule (2) et orientés vers le sol (5), et une unité d'interprétation (10) pourvue d'un contrôleur (13) associé à l'unité d'actionnement hydraulique (3), l'unité d'actionnement hydraulique (3) comportant un mécanisme de levage (14) et un vérin de bras oscillant supérieur (18) pour l'outil porté (4), lesquels peuvent être activés par l'unité d'interprétation (10),
l'unité d'interprétation (10) étant conçue pour exécuter les étapes suivantes du procédé :
a) déchargement d'un produit de remplissage (30) depuis un réservoir (27) de l'outil porté (4) pendant le déplacement du véhicule (2) ;
b) détermination d'un écart de hauteur (40) et d'une inclinaison (32) du véhicule (2) ou de l'outil porté (4) par rapport au sol (5) pendant le déplacement du véhicule (2) ;
c) comparaison de l'écart de hauteur déterminé et de l'inclinaison déterminée avec au moins une valeur de consigne pouvant être prédéfinie ;
d) activation d'au moins un mécanisme de levage (14) ou d'un vérin de bras oscillant supérieur (18) lorsqu'au moins l'écart de hauteur (40) ou l'angle d'inclinaison (41) est différent de la valeur de consigne.

2. Dispositif (1) selon la revendication 1, les capteurs de détermination de distance (8, 9) étant positionnés sur le véhicule (2).

3. Dispositif (1) selon la revendication 1, les capteurs de détermination de distance (8, 9) étant positionnés sur l'outil porté (4).

4. Dispositif (1) selon l'une des revendications précédentes, les capteurs de détermination de distance (8, 9) étant conçus pour déterminer au moins un écart de hauteur (33, 34, 40) ou un angle d'inclinaison (32, 41) du véhicule (2) ou de l'outil porté (4) par rapport au sol (5).

5. Dispositif (1) selon l'une des revendications précédentes, en vue de la régulation de niveau de l'outil porté (4) par rapport au sol (5), son écart de hauteur (40) pouvant être réglé par le mécanisme de levage (14) et son inclinaison (41) par le vérin de bras oscillant supérieur (18).

6. Procédé pour faire fonctionner un véhicule (2) équipé d'une unité d'actionnement hydraulique (3) destinée à réguler le fonctionnement d'un outil porté (4) sur le véhicule (2) et d'une unité de détection de position (7), comprenant au moins les étapes suivantes :
a) déchargement d'un produit de remplissage (30) depuis un réservoir (27) de l'outil porté (4) pendant le déplacement du véhicule (2) ;
b) détermination d'un écart de hauteur (40) et d'une inclinaison (32) du véhicule (2) ou de l'outil porté (4) par rapport au sol (5) pendant le déplacement du véhicule (2) ;
c) comparaison de l'écart de hauteur déterminé et de l'inclinaison déterminée avec au moins une valeur de consigne pouvant être prédéfinie ;
d) activation d'au moins un mécanisme de levage (14) ou d'un vérin de bras oscillant supérieur (18) lorsqu'au moins l'écart de hauteur (40) ou l'angle d'inclinaison (41) est différent de la valeur de consigne.

7. Procédé selon la revendication 6, comprenant les processus suivants à l'étape b) :
b.1) détermination de deux écarts de hauteur (33, 34) au moyen de deux capteurs de détermination de distance (8, 9), positionnés l'un derrière l'autre dans le sens du déplacement (6) du véhicule (2) et orientés vers le sol (5) ;
b.2) identification d'une différence entre les écarts de hauteur (33, 34) déterminés avec les capteurs de détermination de distance (8, 9) ;
b.3) identification de l'inclinaison du véhicule (2) à partir de la différence liée à la distance.

8. Procédé selon la revendication 7, les écarts de hauteur (33, 34, 40) déterminés au processus b.1) étant détectés en permanence.
